# EUROPEAN PATENT SPECIFICATION

(11) **EP 1 899 622 B1**
(45) Date of publication and mention of the grant of the patent: **10.10.2018**
(21) Application number: 05755638.3
(22) Date of filing: 30.06.2005
(51) Int. Cl.: F16G 5/16

(54) **PUSH BELT WITH CURVED TRANSVERSE ELEMENTS**
SCHUBRIEMEN MIT GEKRÜMMTEN QUERELEMENTEN
COURROIE DE POUSSÉE À ÉLÉMENTS TRANSVERSAUX COURBÉS

(43) Date of publication of application: 19.03.2008
(73) Proprietor: ROBERT BOSCH GMBH, 70442 Stuttgart (DE)
(72) Inventor: FAES, Paulus, Adrianus, Jospehus, Maria, NL-5045 ZH Tilburg (NL); VAN DER MEER, Cornelis, Johannes, Maria, NL-5032 XG Tilburg (NL)
(74) Representative: Plevier, Gabriel Anton Johan Maria
(86) International application number: PCT/NL2005/000464
(87) International publication number: WO 2007/004858

(56) References cited:
- EP-A- 0 781 939
- WO-A-2004/111490
- PATENT ABSTRACTS OF JAPAN vol. 2003, no. 12, 5 December 2003 (2003-12-05) -& JP 2004 225787 A (TOYOTA MOTOR CORP), 12 August 2004 (2004-08-12)
- PATENT ABSTRACTS OF JAPAN vol. 2000, no. 08, 6 October 2000 (2000-10-06) -& JP 2000 130516 A (FUKUJU KOGYO KK), 12 May 2000 (2000-05-12)

## Description

The present invention relates to a driving belt, known as a push belt, for a continuously variable transmission that is defined in the preamble of the claim 1.

Such push belts are generally known, e.g. from EP-A-0014013. The generally known push belt is composed of a tensile means along which a plurality of transverse elements is freely moveable in longitudinal direction. The elements have an axially or width-wise extending tilting line or zone, i.e. extending transversely with respect to the belt's longitudinal direction, and a tapered bottom part so as to be able to mutually tilt, for negotiating the bent trajectory part of the belt between the sheaves of a pulley in the transmission. The generally known belts are provided with transverse elements that show a projection and recess or hole to ensure that transverse elements located adjacently to each other are correctly positioned with respect to each other during operation of the push belt by the mating of respective projections with respective holes. The projection and hole are each provided in a respective main face of the respective element, which main faces predominantly face in the longitudinal direction of the belt.

The projection and hole are included in a third or head part of the element on opposite sides thereof, which head part is situated above, i.e. radially outside the tensile means. A second or pillar part of the element is located between the head part and a first or base part of the element that is situated under, i.e. radially inside the said tensile means, as well as between two laterally extending and laterally open recesses defined on either side of the pillar part between the head and base parts of the element, each recess provided for receiving a stack of endless, thin and flat metal rings. Together, these two ring stacks form the said tensile means, alternatively denoted carrier. Said base part of the element is laterally provided with so-called flanks for contacting the respective contacting faces of the cone shaped discs of a pulley, in which contact the elements of the belt are intended to be tightly clamped by said pulley during normal operation.

The concept of the projection and hole for at least partly determining the position and orientation of the transverse elements relative to one another in the belt has proven to be disadvantageous, in the sense that it adds to the size of the elements as well as to the cost of the manufacturing process, by the force and the precision required at forming the elements, conventionally in a blanking process. These problems associated with the current belt, as well as an alternative embodiment of the transverse element that aims to overcome these problems are for example known from the European patent publication no. 1167812. In this alternative embodiment, a projection and hole are mainly included in the pillar part of the element, thereby extending throughout the axial width of that part. Such design being considered favourable in that the head part of the element may be produced smaller in size and in that such projection and hole of oblong shape can be produced cheaply as compared with the presently predominately applied round shape.

From JP-A-2004225787 it is known that as a result of the known manufacturing process the transverse elements can be slightly curved or bent about the radial direction. The amount of bending of such known curved shape of the transverse elements being normally distributed between them, including positive, negative and zero amounts of bending. According to JP-A-2004225787 these known curved transverse elements come in two shape variants. In a first shape variant thereof, the transverse element is smoothly curved as a whole, i.e. both the head part and the base part of the transverse elements are curved in a mutually conforming manner. In a second shape variant thereof, the head part of the transverse element is twisted relative to the base part thereof.

From JP-A-2000130516 A and from EP-A-0781939 it is known to bend a part or the whole of the head part of the transverse elements of the belt about the axial direction relative to the respective base part thereof by providing an axially oriented fold in the head part or the pillar part of the elements respectively.

The present invention aims to provide for a further alternative embodiment, preferably while simplifying the manufacture of the transverse elements even further. According to the invention this is realised by applying the features of the characterising portion of claim 1.

In such a novel push belt the transverse elements thereof are at least partly curved or bent along the axial direction by both ear parts of the head part of the transverse elements being bent towards each other about the radial direction relative to the central part of the head part. Hereby, the adjacent transverse elements mutually engage in the axial direction, such that in this axial direction a relative position and orientation of the elements is determined, favourably without the need for the conventional projection and hole.

Hereby, favourably, the transverse elements may be produced more economically, since tool parts of the blanking machine, such as the punch and counter punch, wear out considerably slower in the absence of the conventional projection and recess otherwise to be formed thereby. Also, the novel design of the belt's transverse elements implies that the head parts thereof may be made with a smaller size, economically favourably using less material and functionally favourably incorporating less weight in the drive belt. Further, the alternative and novel design of the transverse elements has the additional advantage that it can be easily implemented in the conventional manufacturing process wherein the individual elements are blanked from a strip of base material, i.e. without substantial modification of the nature of the manufacturing process. According to the invention, the head part can, for example, be shaped in accordance with the present invention simply by bending the head part between an appropriately shaped mould and counter mould, possibly even in the blanking machine itself.

The novel design according to the invention may favourably be complemented with a further aspect of the invention, i.e. the provision of a means for positioning the adjacent transverse elements also in the radial direction. Such means may be realised in accordance with the invention by the transverse element also being at least partly curved or bent along the radial direction, e.g. by an axially oriented fold provided in the neck part. Preferably, this latter design feature is realised by at least a part of the head part being bent about the axial direction relative to the base part of the elements. Hereby, the adjacent transverse elements mutually engage also in the radial direction, such that in this radial direction a relative position and orientation of the elements is determined. Again, favourably without the need for the conventional projection and hole.

The invention will now by way of example further be elucidated along a drawing in which:
Figure 1 is a perspective view of a known continuously variable transmission provided with a push belt;
Figure 2A represents a frontal view of a known transverse element of the push belt;
Figure 2B is a side elevation of the element according to figure 2A;
Figure 3A shows, in schematic top elevation, an embodiment of a transverse element not according to the invention;
Figure 3B represents a side elevation of the element according to figure 3A;
Figure 3C represents a frontal view of the element according to figure 3A;
Figure 4 shows, in schematic top elevation, an embodiment of a transverse element according to the invention;
Figure 5 shows, in schematic top elevation, an embodiment of a transverse element not according to the invention; and
Figure 6 represents a further modification in accordance with the embodiment of a transverse element according to figures 3A-3C.

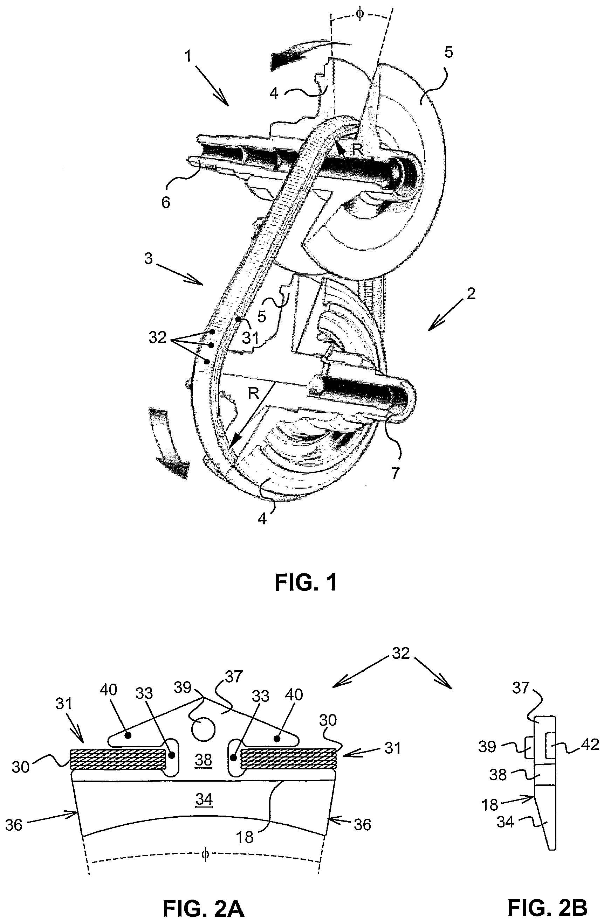

Figure 1 shows the central parts of a continuously variable transmission as is used in the drive line of, for example, passenger cars. The transmission per se is generally known and comprises a drive or primary pulley 1 on a primary shaft 6 and driven or secondary pulley 2 on a secondary shaft 7, each pulley 1, 2 comprising two frusto-conical pulley discs 4, 5 between which there is located a driving belt 3, in casu a push belt 3. At least one disc 4 of a pulley 1, 2 can be displaced in the axial direction along a respective axle 6, 7 on which the discs 4, 5 are mounted to narrow, respectively widen a V-shaped groove that is defined between these discs 4, 5 for radially displacing the push belt 3 and/or for exerting a clamping force thereon, so that a driving force may be transmitted between the push belt 3 and the pulleys 1, 2 by means of friction.

The known push belt 3 of figure 1 is shown in more detail in a cross-section thereof of figure 2A. Hereby, figure 2B provides a side elevation of the transverse element 32 as such. The known belt 3 comprises a number of relatively thin transverse elements 32 and a tensile means 31, which in this example consists of two stacks of a number of endless, thin and flat metal rings 30 that are mutually nested in radial direction, one around one another. Each stack of rings 31 is accommodated in an opening 33 of the transverse elements 32, whereby the elements 32 are movable along the circumference of the tensile means 31.

The transverse element 32 comprises a base part 34, which is situated below or -viewed in the radial direction- inside the tensile means 31 and forms a bottom side of the openings 33. Lateral side parts 40 denoted ear parts 40 of a generally arrowhead-shaped head part 37 of the transverse element 32 form a top side of the openings 33, each ear part 40 extending in an axial direction over the tensile means 31. Situated between the openings 33 is a so-called pillar part 38 of the transverse element 32 that connects the base part 34 and the head part 37 to each other. The base part 34 comprises supporting surfaces 35 for supporting both parts of the tensile means 31 and on either lateral side thereof a surface, denoted flank 36, for contacting a respective pulley disc 4, 5. The flanks 36 are shaped as essentially straight, however, mutually diverging along the height of the element 32, i.e. radially outward with respect to the push belt 3 as a whole, whereby the angle of divergence φ essentially matches that of the of the pulley V-grooves (see figure 1).

As is further visible in figures 2A en 2B, the transverse element 32 is provided with an axially extending tilting line 18 below which the element tapers-off, so as to allow adjacent elements 32 to tilt with respect to one another. Also, the head part 37 of the generally known transverse element 32 shows a projection 39 and a recess or hole 42 that are provided to mutually position, i.e. align, adjacent elements 32 during operation of the push belt 3 by a mating thereof.

To overcome, at least mitigate, disadvantages that are associated with the provision of the projection 39 and hole 42 both in manufacturing and in use, the present invention provides for an alternative design of the push belt 3, in particular of the transverse element 32 component thereof, by which design, adjacent elements 32 in the push belt 3 are mutually positioned in the axial direction without the need for the conventionally applied projection 39 and hole 42.

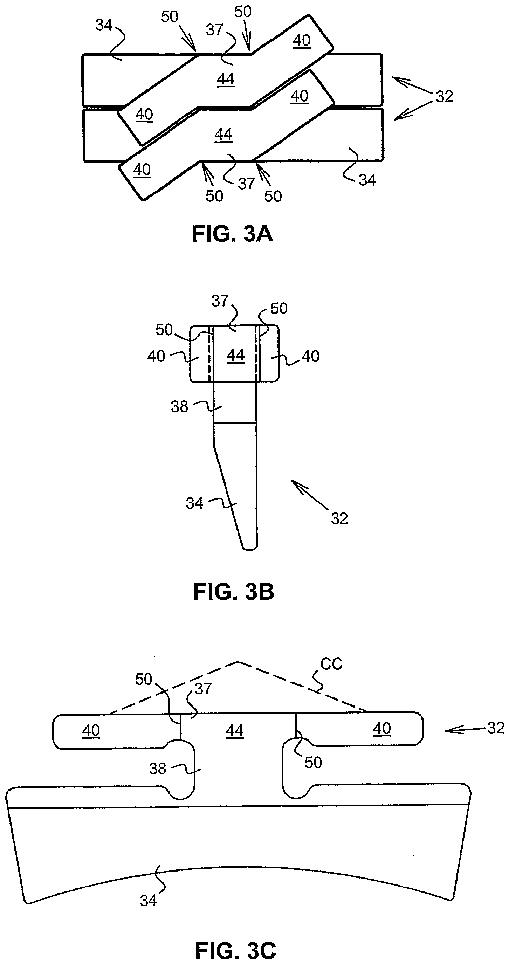

In a first embodiment of an element 32 not according to the invention, which is illustrated in figures 3A to 3C, the element 32 is partly curved in the axial direction, in particular the ear parts 40 of the element's head part 37 are bent about the radial direction relative to a central part 44 of the head part 37, thus providing radially oriented folds 50 between the ear parts 40 and the central parts 44. Of such first embodiment, figure 3A provides a top view, i.e. looking in radially inward direction, figure 3B provides a side elevation, i.e. looking in axial direction, and figure 3C provides a front elevation, i.e. looking in the longitudinal direction of the belt 3.

Thus, the ear parts 40 of the head part 37 of the transverse element 32 are deflected, i.e. bent about an radially oriented, imaginary axis, respectively towards a front and rear direction in the longitudinal direction, i.e. along the circumference of the belt 3. Hereby, the central head part 44 has a width that at least largely corresponds to the width of the pillar part 38 and has remained undeflected relative to the pillar and base parts 34, 38 of the element 32, i.e. is oriented predominantly perpendicular to the belt's longitudinal direction.

Figure 3C provides, in a frontal view of the transverse element 32, an indication of a favourable effect that may be obtained with this design. The figure 3C illustrates that in the absence of the conventional projection 39 and hole 42 in the head part 37 of the element 32, the size thereof may be reduced relative to what is conventionally applied, in particular its dimension in the radial direction, i.e. its height may be reduced. In the figure, the dashed line marked CC provides an indication of the outer contour of a head part 37 of such conventional design, which would be required to accommodate the projection 39 and hole 42.

As may be understood from in particular figure 3A, each pair of adjacently positioned transverse elements 32 in the belt 3, mutually engage another in the transverse or axial direction by their respective ear parts 40. Thus favourably determining the relative position and orientation of the adjacent elements 32 in this direction without the need for the conventional projection 39 and hole 42.

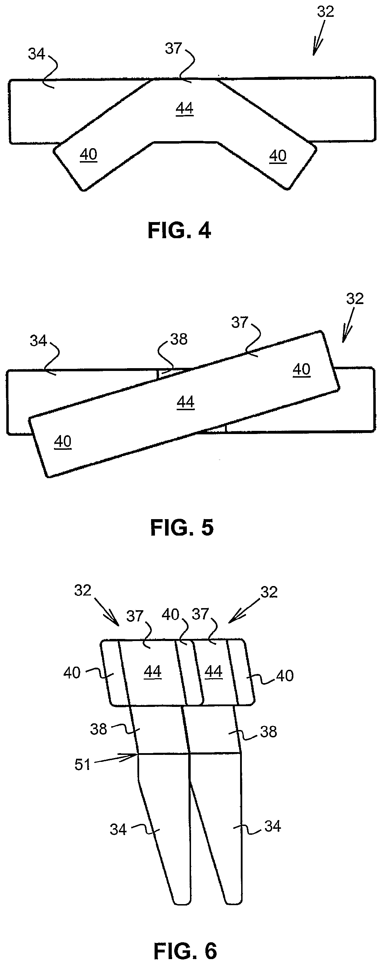

Figure 4 provides an embodiment of such novel transverse element 32 according to the invention, wherein both ear parts 40 of the element 32 are deflected in the same direction, in casu forward with respect to the said longitudinal direction of the belt 3. Just like in the previous example, the central head part 44 has remained undeflected relative to the pillar and base parts 34, 38 of the element 32.

Figure 5 provides an embodiment of the transverse element 32 not according to the invention, wherein the head part 37 is slightly rotated about the radial direction as a whole, such that the ear parts 40 thereof are respectively deflected to the front and to the back relative to the said longitudinal direction of the belt 3. Thus in this case, in contrast with the previous two examples, also the central head part 44 is positioned at a notional angle relative to the base part 34 of the element 32. Such a deflection of the head part 37 may be realised by a slight, however notional, twisting of the pillar part 38 of the element 32.

The above-proposed designs focus on the mutual positioning of the transverse elements 32 of the push belt 3 in transverse or axial direction, that is for instance required in the straight trajectory part of the belt in between the pulleys 1, 2. For a positioning of the transverse elements 32 in height or radial direction, it may be relied on a contact between the carrier 31 and the base part 32 or the ear parts 40 of the elements 32, which contacts respectively limit a radially outward, i.e. upward, and a radially inward, downward, movement thereof. Still, if desired, a relative movement of adjacent elements 32 may be controlled in accordance with the present invention also in this direction. To this end, the invention proposes to at least partly curve the transverse elements 32 also in the radial direction, in particular by bending the element's head part 37 about the axial direction relative to the base part 34 of the element 32.

Figure 6, in a side elevation, shows the transverse element 32 as described previously along the figures 3A to 3C, whereof the head and pillar parts 37, 38 are, however, also bent forward about the axial direction relative to the imaginary plane in which the base part 34 lies. Thus also providing the elements 32 with an axially oriented fold 52 between their base and pillar parts 37, 38. It is remarked that this latter design feature as such is described in the patent application EP-A-0781939. A further design feature for the mutually positioning of adjacent transverse elements 32 in the radial direction is known from, for example, JP-58-081252.

At least in combination, the above described design features of bending at least a part 34, 37, 38, 40 and/or 44 of the transverse element 32 in the axial and the radial direction form an advantageous functional alternative to the conventional projection 39 and recess 42. In contrast to the these known means, the novel transverse element design in accordance with the present invention may be produced relatively easily, e.g. simply by appropriately shaping the punch and counter punch of a conventional fine-blanking process, such that there as a mould for providing the element 32 with the desired curved shaped. Alternatively, the transverse elements 32 may be provided with the desired curved shaped after they have been formed in the blanking machine in a separate and additional deforming process step, wherein the appropriate part or parts 34, 37, 38, 40 and/or 44 of the elements 32 is/are deflected by bending it an imaginary axial and/or radial axis of the push belt 3.

## Claims

1. A push belt (3) for use in a continuously variable transmission that comprises a tensile means (31) composed of at least one stack of a number of endless, thin and flat metal rings (30) and a plurality of transverse elements (32) that are movable along the circumference of the tensile means (31), each of which comprises a base part (34) that is located radially inside the tensile means (31), a head part (37) that is located radially outside the tensile means (31) and a pillar part (38) connecting the head part (37) to the base part (34), and whereof the head part (37) has two ear parts (44) each provided on a respective axial side of a central part (40) of the head part (37), at the location of which central part (40) the head part (37) is connected to the pillar part (38), **characterised in that**, the transverse elements (32) of the push belt (3) are at least partly curved in the axial direction by the ear parts (44) of the transverse elements (32) both being deflected in the longitudinal direction of the push belt (3) relative to the central part (40) of the head part (37) by being bent towards each other about the radial direction.

2. Push belt (3) according to claim 1, **characterised in that**, the transverse element (32) is at least partly curved also in the radial direction, whereby the head part (37) is at least partly deflected in the longitudinal direction of the belt (3) relative to the base part (34) by being bent about the axial direction.

3. Push belt (3) according to claim 1 or 2, **characterised in that**, at least a part (44) of the head part (37) predominantly lies in an imaginary plane that is oriented at an angle with respect to an imaginary plane in which the base part predominantly lies (34).

4. Push belt (3) according to claim 1, 2 or 3, **characterised in that**, the transverse elements (32) are smoothly curved such that main faces thereof that predominantly face in the longitudinal direction of the belt (3) are at least partly curved in an essentially conforming manner in either one or both of the (radial) height and (axial) width direction of the element (32).

5. Push belt (3) according to any one of the preceding claims, **characterised in that**, the transverse elements (32) thereof are each made by cutting it from a strip of base material by means of a blanking machine and **in that** the curvature of the elements (32) in the axial direction and/or the radial direction is/are provided by pressing the material of an element (32) after it has been cut between a curved mould and counter mould.

6. Push belt (3) according to any one of the preceding claims, **characterised in that**, the transverse elements (32) thereof are each made by cutting it from a strip of base material by means of a blanking machine and **in that** the curvature of the elements (32) in the axial direction and/or the radial direction is/are provided by pressing the material of an element (32) during the cutting of element (32) between a so-called cutter or punch and a so-called ejector or counter punch of the blanking machine.

## Patentansprüche

1. Schubriemen (3) zur Verwendung in einem stufenlosen Getriebe, der ein Zugmittel (31) umfasst, das sich aus mindestens einem Stapel einer Anzahl von endlosen, dünnen und flachen Metallringen (30) und einer Vielzahl von Querelementen (32) zusammensetzt, die entlang des Umfangs des Zugmittels (31) bewegbar sind, das jeweils ein Basisteil (34), das radial innerhalb des Zugmittels (31) angeordnet ist, ein Kopfteil (37), das radial außerhalb des Zugmittels (31) angeordnet ist, und ein Säulenteil (38), das das Kopfteil (37) mit dem Basisteil (34) verbindet, umfasst, und dessen Kopfteil (37) zwei jeweils an einer axialen Seite eines Mittelteils (40) des Kopfteils (37) vorgesehene Ohrteile (44) aufweist, bei der an der Stelle des Mittelteils (40) das Kopfteil (37) mit dem Säulenteil (38) verbunden ist, **dadurch gekennzeichnet, dass** die Querelemente (32) des Schubriemens (3) zumindest teilweise in axialer Richtung durch die Ohrteile (44) der Querelemente (32) gekrümmt sind, die beide in Längsrichtung des Schubriemens (3) relativ zum Mittelteil (40) des Kopfteils (37) abgelenkt sind, indem sie in radialer Richtung zueinander hingebogen sind.

2. Schubriemen (3) nach Anspruch 1, **dadurch gekennzeichnet, dass** das Querelement (32) auch in radialer Richtung zumindest teilweise gekrümmt ist, wobei das Kopfteil (37) in Längsrichtung des Riemens (3) relativ zum Basisteil (34) zumindest teilweise abgelenkt ist, indem es in axialer Richtung gebogen ist.

3. Schubriemen (3) nach Anspruch 1 oder 2, **dadurch gekennzeichnet, dass** zumindest ein Teil (44) des Kopfteils (37) überwiegend in einer imaginären Ebene liegt, die in einem Winkel zu einer imaginären Ebene ausgerichtet ist, in der das Basisteil (34) überwiegend liegt.

4. Schubriemen (3) nach Anspruch 1, 2 oder 3, **dadurch gekennzeichnet, dass** die Querelemente (32) gleichmäßig gekrümmt sind, sodass Hauptflächen davon, die überwiegend in Längsrichtung des Riemens (3) liegen, zumindest teilweise in einer oder beiden der (radialen) Höhen- und (axialen) Breitenrichtung des Elements (32) im Wesentlichen konform gekrümmt sind.

5. Schubriemen (3) nach einem der vorhergehenden Ansprüche, **dadurch gekennzeichnet, dass** dessen Querelemente (32) jeweils durch Schneiden aus einem Streifen aus Grundmaterial mittels einer Stanzmaschine hergestellt sind und dass die Krümmung der Elemente (32) in axialer Richtung und/oder in radialer Richtung durch Pressen des Materials eines Elements (32) erreicht wird, nachdem es zwischen einer gekrümmten Form und einer Gegenform zugeschnitten wurde.

6. Schubriemen (3) nach einem der vorhergehenden Ansprüche, **dadurch gekennzeichnet, dass** dessen Querelemente (32) jeweils durch Schneiden aus einem Streifen aus Grundmaterial mittels einer Stanzmaschine hergestellt sind und dass die Krümmung der Elemente (32) in axialer Richtung und/oder in radialer Richtung durch Pressen des Materials eines Elements (32) während des Schneidens des Elements (32) zwischen einem sogenannten Schneidwerkzeug oder einem Stempel und einem sogenannten Auswerfer oder Gegenstempel der Stanzmaschine erreicht wird.

## Revendications

1. Courroie de poussée (3) à utiliser dans une transmission à variation continue, comprenant des moyens de traction (31) composés d'au moins une pile d'un certain nombre d'anneaux métalliques plats minces et sans fin (30) et une pluralité d'éléments transversaux (32) qui sont déplaçables le long de la circonférence des moyens de traction (31), dont chacun comprend une partie de base (34) qui est située radialement à l'intérieur des moyens de traction (31), une partie de tête (37) qui est située radialement à l'extérieur des moyens de traction (31) et une partie de pilier (38) qui connecte la partie de tête (37) à la partie de base (34), et dans laquelle la partie de tête (37) comprend deux parties d'oreille (44) prévues chacune sur un côté axial respectif d'une partie centrale (40) de la partie de tête (37), à l'endroit où la partie centrale (40) de la partie de tête (37) est connectée à la partie de pilier (38), **caractérisée en ce que** les éléments transversaux (32) de la courroie de poussée (3) sont au moins partiellement incurvés dans la direction axiale par les parties d'oreille (44) des éléments transversaux (32) qui sont toutes les deux déviées dans la direction longitudinale de la courroie de poussée (3) par rapport à la partie centrale (40) de la partie de tête (37) en étant pliées l'une vers l'autre autour de la direction radiale.

2. Courroie de poussée (3) selon la revendication 1, **caractérisée en ce que** l'élément transversal (32) est au moins partiellement incurvé également dans la direction radiale, moyennant quoi la partie de tête (37) est au moins partiellement déviée dans la direction longitudinale de la courroie (3) par rapport à la partie de base (34) en étant pliée autour de la direction axiale.

3. Courroie de poussée (3) selon la revendication 1 ou 2, **caractérisée en ce qu'**au moins une partie (44) de la partie de tête (37) se situe principalement dans un plan imaginaire qui est orienté selon un certain angle par rapport à un plan imaginaire dans lequel la partie de base (34) se situe principalement.

4. Courroie de poussée (3) selon la revendication 1, 2 ou 3, **caractérisée en ce que** les éléments transversaux (32) sont légèrement incurvés de telle sorte que des faces principales de ceux-ci qui sont orientées principalement dans la direction longitudinale de la courroie (3) soient au moins partiellement incurvées d'une manière essentiellement correspondante dans l'un et/ou chacun du sens de la hauteur (direction radiale) et du sens de la largeur (direction axiale) de l'élément (32).

5. Courroie de poussée (3) selon l'une quelconque des revendications précédentes, **caractérisée en ce que** les éléments transversaux (32) de celle-ci sont chacun constitués en les découpant à partir d'une bande de matériau de base à l'aide d'une machine de découpage, et **en ce que** la courbure des éléments (32) dans la direction axiale et/ou la direction radiale est formée par le pressage du matériau d'un élément (32) après qu'il ait été découpé entre un moule courbe et un contre-moule.

6. Courroie de poussée (3) selon l'une quelconque des revendications précédentes, **caractérisée en ce que** les éléments transversaux (32) de celle-ci sont chacun constitués en les découpant à partir d'une bande de matériau de base à l'aide d'une machine de découpage, et **en ce que** la courbure des éléments (32) dans la direction axiale et/ou la direction radiale est formée par le pressage du matériau d'un élément (32) pendant la découpe de élément (32) entre ce que l'on appelle un découpeur ou un poinçon et ce que l'on appelle un éjecteur ou un contre-poinçon de la machine de découpage.
